# EUROPÄISCHE PATENTSCHRIFT

(11) **EP 2 628 624 B1**
(45) Veröffentlichungstag und Bekanntmachung des Hinweises auf die Patenterteilung: **29.07.2015**
(21) Anmeldenummer: 12196846.5
(22) Anmeldetag: 13.12.2012
(51) Int. Cl.: B60K 17/28

(54) **Traktor mit Zapfwellenausgang**
Tractor with p.t.o. shaft output
Tracteur avec sortie de prise de force

(30) Priorität: 15.02.2012 DE 102012002798
(43) Veröffentlichungstag der Anmeldung: 21.08.2013
(73) Patentinhaber: CLAAS Tractor S.A.S., 78141 Vélizy-Villacoublay Cedex (FR)
(72) Erfinder: Vallee, Sebastien, 78170 La Celle Saint Cloud (FR); Momal, Pascal, 78140 Velízy Villacoublay (FR)

(56) Entgegenhaltungen:
- EP-A2- 0 262 862
- GB-A- 1 562 565
- US-A- 2 521 729
- US-A- 4 594 906

## Beschreibung

Die vorliegende Erfindung betrifft einen Traktor mit Zapfwellenausgang. Ein solcher Zapfwellenausgang ist herkömmlicherweise über ein sogenanntes Zapfwellengetriebe mit einem Hauptantriebsmotor des Traktors verbunden, um den Betrieb eines zeitweilig an dem Traktor montierten Anbaugeräts wie etwa eines Mähwerks zu ermöglichen.

US 4,594,906 beschreibt einen Traktor nach dem Oberbegriff des Anspruchs 1. Wenn das Zapfwellengetriebe durch den Hauptantriebsmotor angetrieben ist, verursacht es Reibungsverluste, egal ob ein Anbaugerät an den Zapfwellenausgang angeschlossen ist oder nicht, und erhöht den Kraftstoffverbrauch des Traktors. Aufs Jahr hochgerechnet kann dieser Mehrverbrauch sich auf mehrere hundert Liter Dieselkraftstoff belaufen.

Aufgabe der Erfindung ist daher, einen Traktor mit Zapfwellenausgang zu schaffen, der eine verbesserte Kraftstoffeffizienz aufweist.

Die Aufgabe wird mit einem Traktor nach Anspruch 1 gelöst.

Vorzugsweise ist die Kupplung eine formschlüssige Kupplung, insbesondere eine Klauenkupplung. Diese kann hohe Drehmomente bei kompakter Bauform und minimalem Verschleiß übertragen.

Die Kupplung kann zum Lösen und Schließen der Antriebsverbindung eine an einer Welle axial verschiebbare Muffe und eine an einer Umfangskontur der Muffe angreifende Schaltgabel umfassen. Da der Angriff der Schaltgabel unabhängig von der Drehstellung der Welle und der Muffe besteht, kann die Antriebsverbindung in jeder Drehstellung der Muffe durch ein axiales Verschieben der Schaltgabel geöffnet und geschlossen werden.

Einer einfachen Ausgestaltung zufolge kann ein axial verschiebbarer Träger, an dem die Schaltgabel montiert ist, eine aus einer Karosserie des Traktors herausgeführte Handhabe zum Öffnen und Schließen der Kupplung aufweisen.

Zweckmäßigerweise kann die Handhabe benachbart zum Zapfwellenausgang, insbesondere an einer Vorderseite der Karosserie des Traktors, herausgeführt sein, um für einen Benutzer gut erreichbar zu sein, der soeben ein Anbaugerät an den Zapfwellenausgang angeschlossen hat.

Da der Traktor zum Montieren des Anbaugeräts ohnehin stillstehen muss, kann eine einfache, nur bei Stillstand der Welle betätigbare Klauenkupplung verwendet werden, und eine Sperrsynchronisiereinrichtung, die Kosten, Gewicht und Platzbedarf erhöhen würde, wird nicht gebraucht.

Es kann erforderlich sein, die Welle, die das Zapfwellengetriebe antreibt, zu Reparatur- oder Wartungszwecken auszubauen. Ein solcher Ausbau ist erleichtert, wenn die Schaltgabel quer zur Achse quer zu der Welle bewegbar ist.

Insbesondere kann die Beweglichkeit der Schaltgabel darin bestehen, dass sie um eine zu der Welle parallele Achse schwenkbar ist. Wenn der Schwerpunkt der Schaltgabel auf der Achse liegt, kann die Schaltgabel beliebige Drehorientierungen stabil einnehmen, und ein Verschleiß durch ständigen Reibkontakt der Schaltgabel mit der Muffe kann vermieden werden.

Der Träger kann in einer Flanschbuchse geführt sein, die an einem Durchbruch der Karosserie des Traktors durch eine Zahnscheibe gesichert ist

Alternativ oder ergänzend zu der Handhabe kann ein - vorzugsweise elektrisch betriebener - Aktor vorgesehen sein, der zum Lösen und Schließen der Antriebsverbindung an der Kupplung angreift.

Ein solcher Aktor kann durch ein von einem Fahrersitz des Traktors aus erreichbar angeordnetes Bedienelement steuerbar sein, um ein angeschlossenes Anbaugerät in Betrieb nehmen und außer Betrieb setzen zu können, ohne dafür den Fahrersitz verlassen zu müssen.

Der Aktor kann auch durch einen Sensor zum Erfassen eines an dem Zapfwellenausgang angeschlossenen Werkzeugs steuerbar sein. Ein solcher Sensor kann zweckmäßigerweise insbesondere dazu dienen, die Kupplung zu öffnen, wenn erfasst wird, dass ein Anbaugerät abmontiert worden ist. Auf diese Weise ist sichergestellt, dass das Zapfwellengetriebe nicht vom Fahrer unbemerkt mitläuft, wenn kein Anbaugerät angeschlossen ist. Ein erneutes Schließen der Kupplung nach dem Anschließen eines Anbaugeräts erfolgt hingegen zweckmäßigerweise mittels der Handhabe oder des Bedienelements, damit der Fahrer nach Anbringung des Anbaugeräts die Möglichkeit hat, zu entscheiden, ob dieses sofort betrieben werden soll oder ob es, z.B. für eine Straßenfahrt, zunächst noch antriebslos bleiben soll.

Ein Anzeigeelement, das den Zustand der Antriebsverbindung, offen oder geschlossen, anzeigt, sollte vom Fahrersitz des Traktors aus sichtbar sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf einen Traktor mit vorderen und hinteren Zapfwellenanschlüssen;
- Fig. 2: einen schematischen Schnitt durch den vorderen Bereich der Karosserie des Traktors;
- Fig. 3: ein kinematisches Diagramm der in Fig. 2 gezeigten Komponenten;
- Fig. 4: eine perspektivische Ansicht eines Chassis-Vorderteils des Traktors mit darin montiertem Zapfwellengetriebe;
- Fig. 5: ein vergrößertes Detail aus Fig. 4;
- Fig. 6: ein nochmals vergrößertes Detail aus Fig. 5; und
- Fig. 7: die in Fig. 6 gezeigten Komponenten in einem axialen Schnitt.

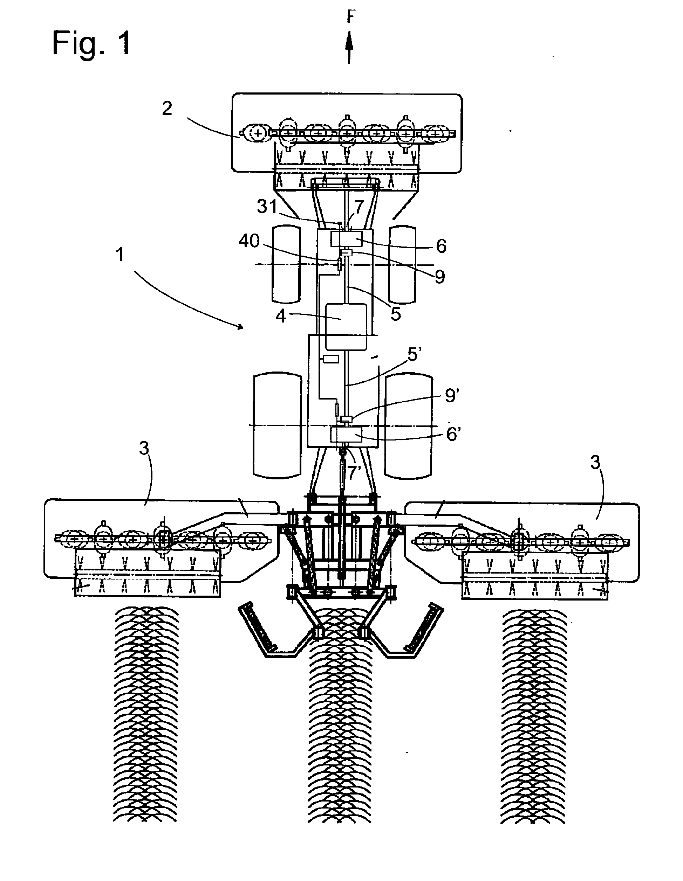

Fig. 1 zeigt in einer schematischen Draufsicht einen Traktor 1 mit vorder- und hinterseitigen Anbaugeräten, hier einem vorderseitig montierten Frontmähwerk 2 und hinterseitig montierten Seitenmähwerken 3. Ein Hauptmotor, üblicherweise ein Dieselmotor 4, ist zentral in der Karosserie des Traktors angeordnet und treibt die Mähwerke 2, 3 sowie, über einen nicht dargestellten Antriebsstrang, die Räder des Traktors 1 an. Eine Welle 5 erstreckt sich vom Dieselmotor 4 zu einem Zapfwellengetriebe 6 im vorderen Bereich der Karosserie, um einen an einer Vorderseite der Karosserie herausgeführten Zapfwellenanschluss 7 anzutreiben. Ein entsprechender Aufbau mit einer Welle 5' und einem Getriebe 6' kann zur Drehmomentübertragung vom Dieselmotor 4 auf einen heckseitigen Zapfwellenausgang 7' vorgesehen sein.

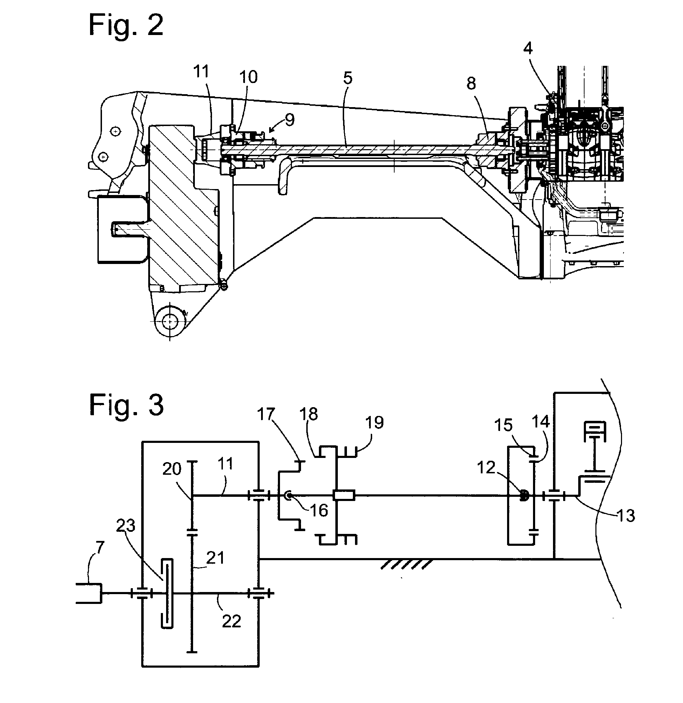

Fig. 2 zeigt einen schematischen Längsschnitt durch den vorderen Bereich der Karosserie des Traktors 1. Die Welle 5 ist mit dem Dieselmotor 4 über ein erstes homokinetisches Gelenk 8 verbunden. Am vorderen Ende der Welle 5 ist eine Klauenkupplung 9 angeordnet, die zwischen einer offenen Stellung und einer eine formschlüssige Verbindung zu einem zweiten homokinetischen Gelenk 10 herstellenden Stellung verstellbar ist. Das homokinetische Gelenk 10 ist mit einer Antriebswelle 11 des Zapfwellengetriebes 6 verbunden. Der Zapfwellenausgang 7 ist aus der Karosserie nach vorn herausgeführt.

Fig. 3 zeigt ein kinematisches Diagramm des in Fig. 2 dargestellten Aufbaus. Das homokinetische Gelenk 9 zwischen der Welle 5 und einer Kurbelwelle 13 des Dieselmotors 4 umfasst ein Kugelgelenk 12, das einen Schwenkmittelpunkt einer möglichen Schwenkbewegung der Zapfwelle 5 relativ zur Kurbelwelle 13 festlegt. Ineinandergreifende Innen- und Außenverzahnungen 14 bzw. 15 der Zapfwelle 5 und der Kurbelwelle 13 sind an der sie jeweils tragenden Welle 13 bzw. 5 fest, aber gegeneinander in begrenztem Umfang axial bewegbar, um ein Schwenken der Welle 5 im Kugelgelenk 12 zu erlauben.

Das homokinetische Gelenk 10 am vorderen Ende der Welle 5 ist teilweise spiegelbildlich zum Gelenk 8 aufgebaut. Es umfasst ein Kugelgelenk 16, das die Zapfwelle 5 mit der Antriebswelle 12 des Zapfwellengetriebes 6 verbindet, und eine Außenverzahnung 17, die an der Antriebswelle 12 befestigt ist. In der in Fig. 3 dargestellten Konfiguration ist diese Außenverzahnung 17 außer Eingriff mit einer Innenverzahnung 18, die Teil einer an der Zapfwelle 5 drehfest, aber axial verschiebbar angeordneten Muffe 19 ist, so dass das Zapfwellengetriebe 6 still steht, egal, ob die Zapfwelle 5 rotiert oder nicht. Nur wenn die Muffe 19 vorgeschoben ist, um die Verzahnungen 17, 18 in Eingriff zu bringen, kann das Zapfwellengetriebe 6 angetrieben werden.

Im Innern des Zapfwellengetriebes 6 ist ein Paar von miteinander kämmenden Zahnrädern 20, 21 an der Antriebswelle 11 und der Zapfwelle 22 gezeigt, und in der Zapfwelle 22 ist zwischen dem Zahnrad 21 und dem Zapfwellenausgang 7 eine Reibkupplung 23 angeordnet, die bei rotierender Zapfwelle 5 allmählich geschlossen werden kann, um ein an den Zapfwellenausgang 7 angeschlossenes Anbaugerät allmählich anlaufen zu lassen.

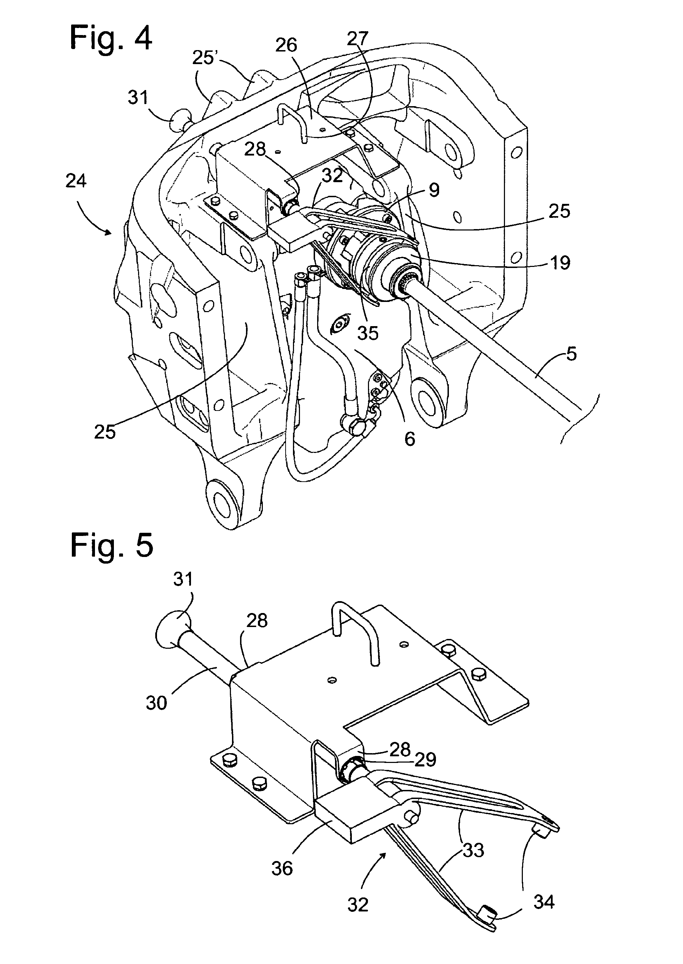

Fig. 4 zeigt eine perspektivische Ansicht eines ein Vorderteil der Karosserie des Traktors 1 bildenden Fronthubwerkgehäuses 24, in dem das Zapfwellengetriebe 6 zwischen zwei inneren Versteifungsrippen 25 des Gehäuses 24 montiert ist. An oberen Kanten der Versteifungsrippen 25 ist ein brückenförmiges Blech 26 befestigt, das einen Schließbügel 27 trägt. An diesem Schließbügel 27 greift in geschlossener Stellung das Schloss einer nicht gezeigten Motorhaube der Traktorkarosserie an. Wie insbesondere in der vergrößerten Detailansicht der Fig. 5 zu erkennen, trägt das Brückenblech 26 zwei nach vorn und nach hinten abstehende, nach unten abgewinkelte Zungen 28, die an ihren unteren Enden Durchbrüche 29 aufweisen, in denen eine Stellstange 30 parallel zur Welle 5 verschiebbar geführt ist. Ein mit einem Handgriff 31 versehenes äußeres Ende der Stellstange 30 ist durch eine Bohrung des Fronthubwerkgehäuses 24 nach vorn aus der Karosserie des Traktors herausgeführt. Die Stellstange 30 ist seitwärts gegen die Welle 5 versetzt, um den Handgriff 31 neben mittig über die Außenseite des Fronthubwerkgehäuses 24 verlaufenden äußeren Versteifungsrippen 25' herauszuführen. Am inneren Ende der Stellstange 31 ist eine Schaltgabel 32 montiert, deren zwei Finger 33 an ihren freien Enden einander zugewandte Zapfen 34 tragen. Die Zapfen 34 greifen in eine umlaufende Nut 35 der Muffe 19 (siehe Fig. 2, 3) ein und zwingen so die Muffe 19, einer Verschiebung der Stellstange 30 in Längsrichtung der Zapfwelle 5 zu folgen, ohne die Drehung der Muffe 19 mit der Zapfwelle 5 zu behindern.

Indem die Stellstange 30 im Querschnitt rund und in den sie führenden Bohrungen des Fronthubwerkgehäuses 24 und des Brückenblechs 26 drehbar ist, kann sie radialen Bewegungen der Zapfwelle 5 folgen. Ein den Fingern 33 gegenüberliegendes Gegengewicht 36 der Schaltgabel 32 ist so dimensioniert, dass der Schwerpunkt der Schaltgabel 32 auf der Längsachse der Stellstange 30 liegt. So ist die Schaltgabel 32 in jeder Drehstellung, die sie erreichen kann, stabil, und eine kontinuierliche Reibung der Zapfen 34 an der Muffe 19, die zu vorzeitigem Verschleiß führen könnte, wird vermieden.

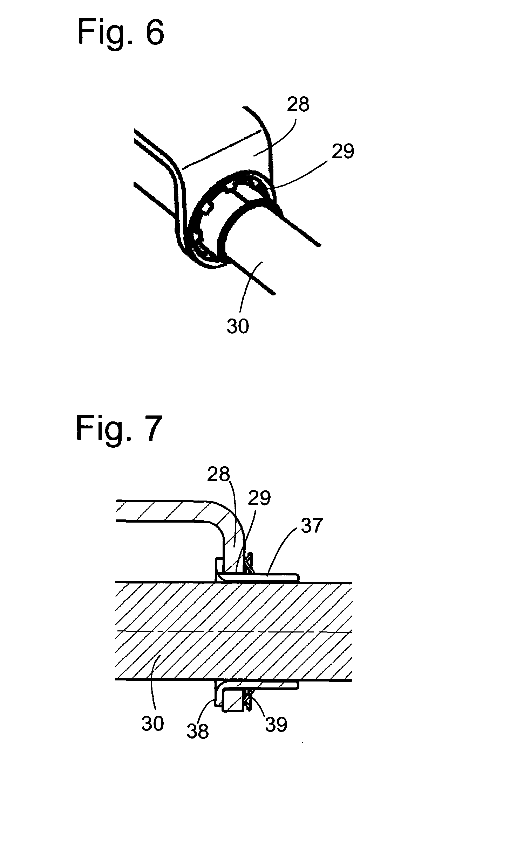

Fig. 6 zeigt in einer nochmals vergrößerten Detailansicht eine der Zungen 28 des Brückblechs 26 und die darin geführte Schaltstange 30, und Fig. 7 zeigt dieselben Komponenten in einem Längsschnitt. In der Bohrung 29 der Zunge 28 ist eine Flanschbuchse 37 aufgenommen, die die Stellstange 30 führt und deren Flansch 38 an einer Seite der Zunge 29 anliegt. Von der gegenüberliegenden Seite aus ist eine Zahnscheibe 39 auf die Flanschbuchse 37 aufgeschoben. Indem einwärts gerichtete Zähne der Zahnscheibe 39 im Kontakt mit der Flanschbuchse 37 elastisch gespannt sind, wird die Zahnscheibe 39 gegen die Zunge 28 gepresst, und die Zunge 28 ist zwischen der Zahnscheibe 39 und dem Flansch 38 fest und sicher geklemmt.

Diese einfache und preiswerte Konstruktion gibt einem Benutzer die Möglichkeit, die Klauenkupplung 10 durch Ziehen bzw. Schieben des Handgriffs 31 zu öffnen oder zu schließen, wenn er bei stehenden Traktor ein Anbaugerät am Zapfwellenausgang 7 an - oder abmontiert.

Es kann wünschenswert sein, die Kupplung 10 auch vom Fahrersitz aus betätigen zu können, z.B., wenn der Traktor mit montiertem Anbaugerät vor oder nach Einsatz des Anbaugeräts einen Weg auf einer Straße zurücklegen muss, und das Anbaugerät in dieser Zeit nicht angetrieben sein soll. Es kann daher, wie in Fig. 1 schematisch dargestellt, der Kupplung 10 zusätzlich ein elektrisch oder hydraulisch betätigter Aktor 40 zugeordnet sein, der über ein entsprechendes, vom Fahrersitz aus erreichbares Bedienelement 41 betätigbar ist. An dem Bedienelement 41 kann eine Anzeige vorgesehen sein, an der der Zustand, offen oder geschlossen, der Klauenkupplung 10 ablesbar ist.

Der Aktor 40 kann zusätzlich auch über einen nicht dargestellten Sensor zum Erfassen des Vorhandenseins eines Anbaugeräts gesteuert sein. Ein solcher Sensor kann ein automatisches Schließen der Kupplung 9 veranlassen, wenn er das Vorhandensein eines Anbaugeräts am Zapfwellenausgang 7 erfasst. Er sollte allerdings durch das Bedienelement 41 übersteuerbar sein, um ein Fahren im Straßenverkehr mit montiertem aber nicht angetriebenem Anbaugerät zu ermöglichen. Vorzugsweise kann ein solcher Sensor dazu dienen, nur die Kupplung 10 zu öffnen, wenn erfasst wird, dass das Anbaugerät abmontiert worden ist, aber nicht zu reagieren, wenn es anmontiert worden ist. So bleibt die Entscheidung, ob ein neu anmontiertes Anbaugerät angetrieben werden soll oder nicht, allein dem Fahrer überlassen.

### Bezugszeichen

- 1: Traktor
- 2: Vorderseitiges Anbaugerät
- 3: Hinterseitiges Anbaugerät
- 4: Dieselmotor
- 5: Zapfwelle
- 6: Zapfwellengetriebe
- 7, 7': Zapfwellenausgang
- 8, 8': homokinetisches Gelenk
- 9, 9': Klauenkupplung
- 10: homokinetisches Gelenk
- 11: Antriebswelle
- 12: Kugelgelenk
- 13: Kurbelwelle
- 14: Innenverzahnung
- 15: Außenverzahnung
- 16: Kugelgelenk
- 17: Außenverzahnung
- 18: Innenverzahnung
- 19: Muffe
- 20: Zahnrad
- 21: Zahnrad
- 22: Zapfwelle
- 23: Reibkupplung
- 24: Fronthubwerkgehäuse
- 25: Versteifungsrippe
- 26: Brückenblech
- 27: Schließbügel
- 28: Zunge
- 29: Bohrung
- 30: Stellstange
- 31: Handgriff
- 32: Handgriff
- 33: Finger
- 34: Zapfen
- 35: Nut
- 36: Gegengewicht
- 37: Flanschbuchse
- 38: Flansch
- 39: Zahnscheibe
- 40: Aktor
- 41: Bedienelement

## Patentansprüche

1. Traktor mit einem Hauptmotor (4) und einem Zapfwellengetriebe (6), das einen Antriebseingang und einen Zapfwellenausgang (7) sowie ein Paar von miteinander kämmenden Zahnrädern (20, 21) an einer dem Antriebseingang zugeordneten Antriebswelle (11) und einer dem Zapfwellenausgang zugeordneten Zapfwelle (22) aufweist, wobei der Antriebseingang mit dem Hauptmotor (4) über eine Kupplung (9) in lösbarer Antriebsverbindung steht und **dadurch gekennzeichnet, dass** an der Zapfwelle (22) zwischen dem Zahnrad (21) und dem Zapfwellenausgang (7) eine Reibkupplung (23) angeordnet ist, die bei rotierender Zapfwelle (22) allmählich geschlossen werden kann, um ein an den Zapfwellenausgang (7) angeschlossenes Anbaugerät allmählich anlaufen zu lassen.

2. Traktor nach Anspruch 1, **dadurch gekennzeichnet, dass** die Kupplung (9, 9') eine formschlüssige Kupplung, insbesondere eine Klauenkupplung ist.

3. Traktor nach Anspruch 1 oder 2, **dadurch gekennzeichnet, dass** die Kupplung (9) eine zum Lösen und Schließen der Antriebsverbindung an einer Welle (5) axial verschiebbare Muffe (19) und eine an einer Umfangskontur (35) der Muffe (19) angreifende Schaltgabel (32) umfasst.

4. Traktor nach Anspruch 3, **dadurch gekennzeichnet, dass** die Schaltgabel (32) an einem axial verschiebbaren Träger (30) montiert ist, wobei der Träger (30) eine aus einer Karosserie des Traktors (1) herausgeführte Handhabe (31) aufweist.

5. Traktor nach Anspruch 3 oder 4, **dadurch gekennzeichnet, dass** die Schaltgabel (32) quer zu der Welle (5) bewegbar ist.

6. Traktor nach Anspruch 5, **dadurch gekennzeichnet, dass** die Schaltgabel (32) um eine zu der Welle (5) parallele Achse schwenkbar ist und der Schwerpunkt der Schaltgabel (32) auf der Achse liegt.

## Claims

1. A tractor comprising a main engine (4) and a power take-off transmission (6) which has a drive input and power take-off output (7) as well as a pair of mutually meshing gears (20, 21) on a drive shaft (11) associated with the drive input and a power take-off shaft (22) associated with the power take-off output, wherein the drive input is releasably drivingly connected to the main engine (4) by way of a clutch (9) and **characterised in that** that arranged on the power take-off shaft (22) between the gear (21) and the power take-off output (7) is a friction clutch (23) which can be gradually closed when the power take-off shaft (22) is rotating in order to cause a mounting attachment connected to the power take-off output (7) to gradually start up.

2. A tractor according to claim 1 **characterised in that** the clutch (9, 9') is a positively locking clutch, in particular a dog clutch.

3. A tractor according to claim 1 or claim 2 **characterised in that** the clutch (9) has a sleeve (19) axially displaceable on a shaft (5) for releasing and closing the drive connection and a shift fork (32) engaging a peripheral contour (35) of the sleeve (19).

4. A tractor according to claim 3 **characterised in that** the shift fork (32) is mounted to an axially displaceable carrier (30), wherein the carrier (30) has a handle (31) passed out of a bodywork of the tractor (1).

5. A tractor according to claim 3 or claim 4 **characterised in that** the shift fork (32) is moveable transversely relative to the shaft (5).

6. A tractor according to claim 5 **characterised in that** the shift fork (32) is pivotable about an axis parallel to the shaft (5) and the centre of gravity of the shift fork (32) is on the axis.

## Revendications

1. Tracteur comprenant un moteur principal (4) et une transmission de prise de force (6) qui présente une entrée d'entraînement et une sortie de prise de force (7) ainsi qu'une paire de roues dentées (20, 21) engrenant l'une avec l'autre sur un arbre de transmission (11) associé à l'entrée d'entraînement et sur un arbre de prise de force (22) associé à la sortie de prise de force, l'entrée d'entraînement étant en liaison d'entraînement libérable avec le moteur principal (4) par l'intermédiaire d'un embrayage (9), **caractérisé en ce que**, sur l'arbre de prise de force (22), entre la roue dentée (21) et la sortie de prise de force (7), est disposé un embrayage à friction (23) qui peut être fermé progressivement lors de la rotation de l'arbre de prise de force (22) pour faire démarrer progressivement un outil raccordé à la sortie de prise de force (7).

2. Tracteur selon la revendication 1, **caractérisé en ce que** l'embrayage (9, 9') est un embrayage à crabotage, en particulier un embrayage à griffes.

3. Tracteur selon la revendication 1 ou 2, **caractérisé en ce que** l'embrayage (9) comprend un manchon (19) coulissant axialement sur un arbre (5) pour libérer et fermer la liaison d'entraînement, et une fourchette de commande (32) agissant sur un contour périphérique (35) du manchon (19).

4. Tracteur selon la revendication 3, **caractérisé en ce que** la fourchette de commande (32) est montée sur un support (30) coulissant axialement, le support (30) présentant une manette (31) sortant d'une carrosserie du tracteur (1).

5. Tracteur selon la revendication 3 ou 4, **caractérisé en ce que** la fourchette de commande (32) est mobile transversalement à l'arbre (5).

6. Tracteur selon la revendication 5, **caractérisé en ce que** la fourchette de commande (32) peut pivoter autour d'un axe parallèle à l'arbre (5), et **en ce que** le centre de gravité de la fourchette de commande (32) se situe sur l'axe.
